# EUROPEAN PATENT APPLICATION

(11) **EP 4 454 473 A1**
(43) Date of publication of application: **30.10.2024**
(21) Application number: 22910536.6
(22) Date of filing: 17.10.2022
(51) Int. Cl.: A23D 7/005, A23D 7/06

(54) **POWDERY OIL OR FAT CONTAINING HIGHLY UNSATURATED FATTY ACID**

(30) Priority: 20.12.2021 JP 2021206354
(71) Applicant: Fuji Oil Holdings Inc., Izumisano-shi, Osaka 598-8540 (JP); Fuji Oil Company, Limited, Izumisano-shi Osaka 598-8540 (JP)
(72) Inventor: MIZUSHIMA, Shigeki, Tsukubamirai-shi, Ibaraki 300-2436 (JP); KANO, Hiroshi, Izumisano-shi, Osaka 598-8540 (JP); UEYAMA, Tomoki, Izumisano-shi, Osaka 598-8540 (JP); INOUE, Ryota, Izumisano-shi, Osaka 598-8540 (JP)
(74) Representative: Becker, Eberhard
(86) International application number: PCT/JP2022/038519
(87) International publication number: WO 2023/119810

(57) **Abstract**

The present invention addresses the problem of providing: a powdery oil or fat containing a highly unsaturated fatty acid, which is prevented from the formation of an off-flavor associated with oxidation over time; a method for producing the powdery oil or fat; and a method for preventing the formation of an off-flavor associated with oxidation over time in a powdery oil or fat containing a highly unsaturated fatty acid. It is found that, in the production of a powdery oil or fat containing a highly unsaturated fatty acid, when a specific plant-derived protein material is dissolved in an aqueous phase that is an outermost layer of a W/O/W double-emulsified state and then the emulsion solution in the double-emulsified state is spray-dried, a powdery oil or fat containing a highly unsaturated fatty acid which is prevented from the formation of an off-flavor associated with oxidation over time can be produced. This finding leads to the accomplishment of the present invention.

## Description

### Technical Field

The present invention relates to a powdered oil and/or fat containing a highly unsaturated fatty acid.

### Background Art

Patent Document 1 is an application entitled "Powdered oil and/or fat" and describes use of high-protein fine powder containing soybean protein as an example.

Patent Document 2 is an application entitled "Powdered oil and/or fat" and indicates soybean protein and wheat protein as examples of the powdered base. This patent document also describes fish oil as an oil and/or fat to be used.

Patent Document 3 is an application entitled "Protein-containing emulsified oil or fat composition for producing emulsified food" and describes a protein specified by a molecular weight distribution.

### Citation List

### Patent Document

Patent Document 1: JP 2002-294275 A
Patent Document 2: JP 2007-289116 A
Patent Document 3: WO 2019/189810

### SUMMARY OF INVENTION

### Technical Problem

An object of the present invention is to provide a powdered oil and/or fat containing highly unsaturated fatty acids with suppressed generation of off-flavors over time due to oxidation, to provide a method for producing the powdered oil and/or fat, and to provide a method for suppressing generation of off-flavors over time due to oxidation in the powdered oil and/or fat containing highly unsaturated fatty acids.

### Solution to Problem

The present inventors have conducted intensive studies to solve the issues. Patent Documents 1 and 2 are both applications relating to a powdered oil and/or fat and are both characterized in that soybean protein is used. However, the soybean proteins used are all common ones, and these patent documents do not disclose what effect the soybean protein exhibits when the soybean protein is made into a powdered oil and/or fat containing a highly unsaturated fatty acid.

Patent Document 3 describes a protein specified by a molecular weight distribution, but does not disclose an effect when a powdered oil and/or fat containing a highly unsaturated fatty acid is prepared, and the issue related to the present invention cannot be solved by the protein having the molecular weight distribution.

As a result of further studies, the present inventors have found that, in the production of a powdered oil and/or fat containing highly unsaturated fatty acids, by using a predetermined vegetable protein material for the outermost layer aqueous phase in a W/O/W double emulsified state and spray-drying an emulsified liquid in the double emulsified state, the powdered oil and/or fat containing highly unsaturated fatty acids with suppressed generation of off-flavors over time due to oxidation can be obtained and have completed the present invention.

That is, the present invention relates to:
(1) a method for producing a powdered oil and/or fat, the method including the following steps of:
   1. preparing an aqueous phase A containing from 15 to 50 mass% of a water-soluble antioxidant dissolved;
   2. obtaining a W/O type emulsion C by adding the aqueous phase A to an oil phase B containing a highly unsaturated fatty acid;
   3. obtaining an aqueous phase D by dissolving a vegetable protein material F in water, the aqueous phase D having a vegetable protein material F content of from 3 to 45 mass%;
   4. obtaining a W/O/W type emulsion E by mixing the W/O type emulsion C and the aqueous phase D; and
   5. obtaining a powdered oil and/or fat containing from 5 to 30 mass% of the highly unsaturated fatty acid by spray-drying the W/O/W type emulsion E,
      wherein the vegetable protein material F satisfies the following requirements a) to c):
      a) a protein content in a solid content is 70 mass% or more,
      b) an NSI is 80 or more, and
      c) an area ratio having 2000 Da or more and less than 20000 Da is from 45 to 90% in a measurement result of a molecular weight distribution;
(2) the production method according to (1), wherein a particle diameter of the aqueous phase A in the emulsion C is 500 nm or less;
(3) the production method according to (1) or (2), wherein the aqueous phase A further contains a carbohydrate;
(4) a method for suppressing generation of off-flavors due to oxidation in a powdered oil and/or fat containing a highly unsaturated fatty acid, the method including the following steps of:
   1. preparing an aqueous phase A containing from 15 to 50 mass% of a water-soluble antioxidant dissolved;
   2. obtaining a W/O type emulsion C by adding the aqueous phase A to an oil phase B containing a highly unsaturated fatty acid;
   3. obtaining an aqueous phase D by dissolving a vegetable protein material F in water, the aqueous phase D having a vegetable protein material F content of from 3 to 45 mass%;
   4. obtaining a W/O/W type emulsion E by mixing the W/O type emulsion C and the aqueous phase D; and
   5. obtaining a powdered oil and/or fat containing from 5 to 30 mass% of the highly unsaturated fatty acid by spray-drying the W/O/W type emulsion E,
      wherein the vegetable protein material F satisfies the following requirements a) to c):
      a) a protein content in a solid content is 70 mass% or more,
      b) an NSI is 80 or more, and
      c) an area ratio having 2000 Da or more and less than 20000 Da is from 45 to 90% in a measurement result of a molecular weight distribution;
(5) the method according to (4), wherein a particle diameter of the aqueous phase A in the emulsion C is 500 nm or less;
(6) the method according to (4) or (5), wherein the aqueous phase A further contains a carbohydrate;
(7) a powdered oil and/or fat having the following configuration of:
   1. containing from 5 to 30 mass% of a highly unsaturated fatty acid;
   2. including: an oil phase B as a continuous phase containing a highly unsaturated fatty acid; and an aqueous phase A containing from 15 to 50 mass% of a water-soluble antioxidant dissolved, the aqueous phase A being dispersed in the oil phase B; and
   3. containing from 5 to 60 mass% of a vegetable protein material F,
      wherein the vegetable protein material F satisfies the following requirements a) to c):
      a) a protein content in a solid content is 70 mass% or more,
      b) an NSI is 80 or more, and
      c) an area ratio having 2000 Da or more and less than 20000 Da is from 45 to 90% in a measurement result of a molecular weight distribution;
(8) the powdered oil and/or fat according to (7), wherein a particle diameter of the aqueous phase A present in the oil phase B is 500 nm or less; and
(9) the powdered oil and/or fat according to (7) or (8), wherein the aqueous phase A further contains a carbohydrate.

### Advantageous Effects of Invention

According to the present invention, it is possible to produce a powdered oil and/or fat containing highly unsaturated fatty acids with suppressed generation of off-flavors over time due to oxidation.

### DESCRIPTION OF EMBODIMENTS

In the present invention, a highly unsaturated fatty acid means an unsaturated fatty acid having two or more unsaturated bonds. Representative examples of the highly unsaturated fatty acids include DHA (docosahexaenoic acid) and EPA (eicosapentaenoic acid), and the present invention is characterized in that the generation of off-flavors can be suppressed in a powdered oil and/or fat containing them.

The highly unsaturated fatty acid in the present invention is present in the state of a triglyceride (so-called oil and/or fat) in which any number of from 1 to 3 is bonded to glycerin. Such an oil and/or fat may be referred to as PUFA-containing oil and/or fat in the present invention.

A method for strongly suppressing oxidation of highly unsaturated fatty acids represented by DHA and EPA is disclosed, for example, in WO 2017/150558.

As a general method for producing a powdered oil and/or fat, there is a method that includes preparing an O/W type emulsified liquid and spray-drying the emulsified liquid. For this, water-soluble proteins such as casein are often used in the aqueous phase (for example, JP H03-49649 A).

Initially, the present inventors also thought that a powdered oil and/or fat containing highly unsaturated fatty acids whose oxidation is strongly suppressed can be easily prepared by combining these techniques. However, when it was actually prepared, off-flavors were generated due to oxidation over time, and the issue could not be solved.

That is, converting the oil and/or fat containing highly unsaturated fatty acids whose oxidation is strongly suppressed as disclosed in WO 2017/150558 into a powdered oil and/or fat by applying a known technique while maintaining its function is difficult, and developing another specific technique is necessary.

Further details are provided below.

### (Powdered Oil and/or Fat)

In the present invention, the powdered oil and/or fat basically contains an oil and/or fat that is liquid at room temperature and other edible components and is in a powder form in appearance. Therefore, for example, oils and/or fats that are solid at room temperature and are powdered do not fall within the powdered oil and/or fat as referred to in the present invention.

In a general method for producing a powdered oil and/or fat, an aqueous phase, which contains an edible component, and an oil and/or fat, which is liquid at room temperature, are emulsified into an oil-in-water type, and then water is evaporated by spray-drying or the like to obtain a powdered oil and/or fat.

### (Water-Soluble Antioxidant)

In the present invention, the water-soluble antioxidant is an antioxidant having a property of being soluble in water. Specific examples of the antioxidant can include ascorbic acid, amino acids, and various polyphenols. Ascorbic acid also includes ascorbates. Sodium ascorbate is preferred. Examples of the various polyphenols can include catechin. "Tea extract" containing catechin as an active ingredient can also be used. It is also possible to use a plurality of water-soluble antioxidants.

In addition, an oil-soluble antioxidant is generally used to prevent oxidation of oils and/or fats which are easily oxidized. However, the present invention is characterized in that a water-soluble antioxidant is used. However, an oil-soluble antioxidant may be used in combination. The use of an appropriate antioxidant makes it possible to produce a powdered oil and/or fat containing highly unsaturated fatty acids which have excellent oxidation stability and suppressed generation of off-flavors over time due to oxidation.

### (Aqueous Phase A)

The aqueous phase is a mixture of water and a water-soluble component in raw materials.

In the present invention, an aqueous phase in which a water-soluble antioxidant is dissolved is provided. This aqueous phase is referred to as the aqueous phase A for convenience. An amount of the water-soluble antioxidant in the aqueous phase A needs to be from 15 to 50 mass%. This amount is more desirably from 20 to 47 mass%, and even more desirably from 22 to 45 mass%.

By the appropriate type and amount of the water-soluble antioxidant in the aqueous phase A, it is possible to obtain a powdered oil and/or fat containing highly unsaturated fatty acids which have excellent oxidation stability and has suppressed generation of off-flavors over time due to oxidation.

In addition to the water-soluble antioxidant, water-soluble solid contents are desirably dissolved in the aqueous phase A. A total amount of the water-soluble solid contents including the water-soluble antioxidant in the aqueous phase A is desirably from 30 to 70 mass%, more desirably from 35 to 65 mass%, and even more desirably from 40 to 60 mass%.

As the water-soluble solid contents other than the water-soluble antioxidant, edible components such as various carbohydrates and proteins can be used. More specific examples of the water-soluble solid contents include dextrin, sucrose, and maltose.

By the appropriate types of the water-soluble solid contents other than the water-soluble antioxidant in the aqueous phase A and the appropriate amount of the water-soluble solid contents including the water-soluble antioxidant, it is possible to obtain a powdered oil and/or fat containing highly unsaturated fatty acids which have excellent oxidation stability and has suppressed generation of off-flavors over time due to oxidation.

### (Oil Phase B)

The oil phase is a mixture of an oil and/or fat and a component soluble in the oil and/or fat in raw materials.

In the present invention, an oil phase containing a PUFA-containing oil and/or fat is prepared. This oil phase is referred to as the oil phase B for convenience. In addition to the PUFA-containing oil and/or fat, other edible oils and/or fats may be mixed into the oil phase, or a PUFA-containing oil and/or fat mixed with an edible oil and/or fat may be used from the beginning.

An amount of the highly unsaturated fatty acid in the oil phase B is desirably from 5 to 40 mass%, more desirably from 10 to 35 mass%, and even more desirably from 13 to 30 mass%. By the appropriate type and amount of the highly unsaturated fatty acid in the oil phase B, it is possible to obtain a powdered oil and/or fat containing highly unsaturated fatty acids which have excellent oxidation stability and has suppressed generation of off-flavors over time due to oxidation.

An oil-soluble antioxidant-soluble antioxidant or an oil-soluble emulsifier can be used in the oil phase B.

### (W/O type emulsion C)

In the present invention, a W/O type emulsion C (hereinafter sometimes simply referred to as the emulsion C) is prepared from the aqueous phase A and the oil phase B. Here, the W/O type emulsion is an emulsion having a configuration in which a continuous phase is an oil phase, and an aqueous phase is dispersed in the oil phase. An amount ratio of the aqueous phase A to the oil phase B (the aqueous phase A/the oil phase B) is desirably from 0.01 to 0.5, more desirably from 0.02 to 0.4, and even more desirably from 0.08 to 0.3. By the appropriate amount ratio of the aqueous phase A to the oil phase B, it is possible to obtain a powdered oil and/or fat containing highly unsaturated fatty acids which have excellent oxidation stability and has suppressed generation of off-flavors over time due to oxidation.

In the preparation of the emulsion C, it is desirable to add the aqueous phase A to the oil phase B while stirring and continue stirring as the mixture forms a near-emulsion, and further to use an emulsifier. Various apparatuses can be used as the emulsifier. Specifically, a high-pressure homogenizer, an ultrasonic emulsifier, and a two-liquid collision type emulsifying apparatus called a wet jet mill can be used. By using an appropriate emulsifying apparatus, a predetermined antioxidant oil and/or fat composition can be obtained. When a high-pressure homogenizer is used, general emulsification conditions are from 30 to 40 MPa and from 10 to 30 passes. The reason that the particle diameter can be easily reduced by using a general emulsifier may be related to the fact that the water-soluble solid content is present in a large amount in a dissolved state in the aqueous phase.

The particle diameter of the aqueous phase A in the emulsion C is desirably 500 nm or less, more desirably 300 nm or less, and even more desirably 200 nm or less.

A method for measuring the emulsified particle diameter is as follows:
Apparatus name: Zetasizer Nano S, Manufacturer: Malvern
Ten (10) µl of the oil and/or fat composition to be measured was diluted with 2 ml of hexane, and measurement was performed. (The measurement result at the stage of the first day after sample preparation is used as a determination index.)
Temperature: 20.0°C
Equilibration time: 240 seconds
Cell: glass cell
Measurement angle: 173°
Positioning method: optimal position selection
Automatic damping option: present

By the appropriate particle diameter of the aqueous phase, it is possible to obtain a powdered oil and/or fat containing highly unsaturated fatty acids which have excellent oxidation stability and has suppressed generation of off-flavors over time due to oxidation.

### (Aqueous Phase D)

In the present invention, an aqueous phase D in which a predetermined vegetable protein material F is dissolved is prepared. It goes without saying that the aqueous phase D is a separate aqueous phase from the aqueous phase A.

An amount of the vegetable protein material F in the aqueous phase D needs to be from 3 to 45 mass%, more desirably from 5 to 40 mass%, and even more desirably from 6 to 35 mass%.

By blending an appropriate amount of an appropriate vegetable protein material F in the aqueous phase D, it is possible to obtain a powdered oil and/or fat containing highly unsaturated fatty acids, which have excellent oxidation stability and have suppressed generation of off-flavors over time due to oxidation.

The aqueous phase D may contain other components as long as the effects of the present invention are not impaired. However, the aqueous phase D desirably does not contain any water-soluble protein other than the O/W type emulsifier and the vegetable protein material F.

By blending an appropriate amount of an appropriate component in the aqueous phase D, it is possible to obtain a powdered oil and/or fat containing a highly unsaturated fatty acid, which has excellent oxidation stability and has suppressed generation of off-flavors over time due to oxidation.

In the present invention, the O/W type emulsifier is an emulsifier having a function of stabilizing an O/W type emulsification and is an emulsifier having an HLB of 7 or more. In the present invention, the water-soluble protein other than the vegetable protein material F is a known water-soluble protein prepared by a known method, and specific examples thereof include sodium caseinate and soybean protein isolate prepared by a normal production method.

### (W/O/W type emulsion E)

In the present invention, a W/O/W type emulsion E is prepared from the W/O type emulsion C and the aqueous phase D. Here, the aqueous phase D is an aqueous phase present in the outermost layer.

A specific structure of the W/O/W type emulsion E is a structure in which the W/O type emulsion C is dispersed in the aqueous phase D. It can be prepared by gradually adding the emulsion C to the aqueous phase D being stirred.

A weight ratio of the W/O type emulsion C to the aqueous phase D, which is (W/O type emulsion C)/aqueous phase D, is desirably from 0.15 to 0.5, more desirably from 0.2 to 0.45, and even more desirably from 0.22 to 0.4. By the appropriate weight ratio of the W/O type emulsion C to the aqueous phase D, it is possible to obtain a powdered oil and/or fat containing highly unsaturated fatty acids which have excellent oxidation stability and have suppressed generation of off-flavors over time due to oxidation.

### (Vegetable Protein Material F)

Examples of a source of the vegetable protein material F in the present invention can include beans such as soybeans, peas, mung beans, lupin beans, chickpeas, kidney beans, lentil beans, and cowpeas; seeds such as sesame, canola seed, coconut seed, and almond seed; grains such as corn, buckwheat, barley, and rice; vegetables; and fruits. More desirable are beans, and more specific examples include soybeans, peas, mung beans, and broad beans, and most desirable are soybeans.

As an intermediate raw material for obtaining the vegetable protein material F, a soybean protein isolate is desirable.

By the use of the desirable raw materials, it is possible to obtain a powdered oil and/or fat containing highly unsaturated fatty acids which have excellent oxidation stability and have suppressed generation of off-flavors over time due to oxidation.

### a) Protein purity

For the vegetable protein material F, a protein content in the solid content needs to be 70 mass% or more, more desirably 75 mass% or more, and even more desirably 80 mass% or more. By the appropriate protein content in the solid content, it is possible to obtain a powdered oil and/or fat containing highly unsaturated fatty acids which have excellent oxidation stability and have suppressed generation of off-flavors over time due to oxidation.

### <Measurement of Protein Purity >

A protein purity is measured by a Kjeldahl method. Specifically, a mass of nitrogen measured by the Kjeldahl method relative to a mass of a protein material dried at 105°C for 12 hours is represented by "mass%" as a protein content in the dried product. Note that the nitrogen conversion coefficient is 6.25. Basically, it is calculated by rounding off to one decimal place.

### b) NSI of protein

The vegetable protein material F is required to have a nitrogen solubility index (NSI) of 80 or more, which is used as an index of protein solubility. More preferably, it is 85 or more, and even more preferably 90 or more.

For example, as a vegetable protein material having a high NSI, it is preferable to use a vegetable protein material which is not subjected to a treatment for insolubilizing a protein, such as an enzymatic decomposition treatment or a mineral addition treatment, or a vegetable protein material which is subjected to only a small amount of such a treatment.

Note that the NSI is expressed as a proportion (mass%) of water-soluble nitrogen (crude protein) to a total nitrogen amount based on a method which will be described below. In the present invention, the NSI is a value as measured in accordance with the method which will be described below.

By the appropriate NSI, it is possible to obtain a powdered oil and/or fat containing highly unsaturated fatty acids which have excellent oxidation stability and has suppressed generation of off-flavors over time due to oxidation.

### <NSI Measurement Method>

Sixty (60) ml of water is added to 3 g of a sample, followed by propeller stirring at 37°C for 1 hour and centrifugation at 1400×g for 10 minutes to collect a supernatant (I). Next, 100 ml of water is again added to the remaining precipitate, and the mixture is again stirred with a propeller at 37°C for 1 hour and then centrifuged to collect a supernatant (II). The supernatants (I) and (II) are combined, and water is added to the mixed liquid to make it 250 ml. After the mixed liquid is filtered with filter paper (No. 5), a nitrogen content of the filtrate is measured by the Kjeldahl method. At the same time, the nitrogen amount in the sample is measured by the Kjeldahl method, and the proportion of the amount of nitrogen recovered as the filtrate (water-soluble nitrogen) to the total amount of nitrogen in the sample is expressed in mass% and is defined as the NSI. Basically, it is calculated by rounding off to one decimal place.

### c) Molecular weight distribution

For the vegetable protein material F, when the molecular weight thereof is measured by gel filtration, an area ratio of the molecular weight distribution having 2000 Da or more and less than 20000 Da needs to be from 45 to 90%. This value is desirably from 47 to 85%, and more desirably from 50 to 75%.

By the appropriate molecular weight distribution, it is possible to obtain a powdered oil and/or fat containing highly unsaturated fatty acids which have excellent oxidation stability and has suppressed generation of off-flavors over time due to oxidation.

### <<Method for Measuring Molecular Weight Distribution>>

A sample solution is prepared by adding an eluent to a protein material to adjust a concentration of the protein material to 0.1 mass%, and then filtering the solution with a 0.2 µm filter. A gel filtration system is assembled by connecting two kinds of columns in series, a known protein or the like (Table 1) serving as a molecular weight marker is first charged, and a calibration curve is determined from the relationship between the molecular weight and the retention time. Next, the sample solution is charged, and the content ratio % of each molecular weight fraction is determined by the ratio of the area of a specific molecular-weight range (time range) to the area of the total absorbance chart (1st column: "TSK gel G3000SWXL" (Sigma-Aldrich), 2nd column: "TSK gel G2000SWXL" (Sigma-Aldrich), eluent: 1% SDS + 1.17% NaCl + 50 mM phosphate buffer (pH 7.0), 23°C, flow rate: 0.4 ml/min, detection: UV 220 nm). Basically, it is calculated by rounding off to one decimal place.

### Molecular weight marker

| Marker | Molecular weight |
|---|---|
| Thyroglobulin | 335000 |
| γ-globulin | 150000 |
| Albumin | 67000 |
| Peroxidase | 43000 |
| Myoglobin | 18000 |
| Cytochrome C | 12384 |
| Insulin | 5734 |
| Glutathione | 307 |
| p-amino acid benzoic acid | 137 |

### Molecular Weight Distribution Adjustment Treatment or Denaturation/Molecular Weight Distribution Adjustment Treatment

The vegetable protein material F can be obtained by combining decomposition and/or denaturation of a protein with adjustment of the molecular weight distribution. Examples of the treatment for decomposing or denaturing a protein include an enzyme treatment, a pH adjustment treatment (for example, an acid treatment or an alkali treatment), a denaturant treatment, a heating treatment, a cooling treatment, a high-pressure treatment, an organic solvent treatment, a mineral addition treatment, a supercritical treatment, an ultrasonic treatment, an electrolysis treatment, and a combination thereof. Examples of the treatment for adjusting molecular weight distribution include an enzyme treatment, filtration, gel filtration, chromatography, centrifugation, electrophoresis, dialysis, and a combination thereof. The order and number of the treatment for decomposing or denaturing a protein and the treatment for adjusting molecular weight distribution are not particularly limited. The treatment for decomposing or denaturing a protein may be performed before the treatment for adjusting molecular weight distribution, the treatment for adjusting molecular weight distribution may be performed before the treatment for decomposing or denaturing a protein, or both the treatments may be performed at the same time. In addition, for example, it is also possible to perform the treatment for decomposing or denaturing a protein between two or more times of the treatment for adjusting molecular weight distribution, to perform the treatment for adjusting molecular weight distribution between two or more times of the treatment for decomposing or denaturing a protein, or to perform each treatment a plurality of times in an arbitrary order. Note that in a case where desired molecular weight distribution is obtained by the treatment of decomposing or denaturing a protein, the treatment for adjusting molecular weight distribution need not be performed. When these treatments are combined and carried out a plurality of times, all the treatments may be carried out continuously from raw materials or may be carried out at intervals. For example, a commercially available product that has undergone a certain treatment may be used as a raw material to perform another treatment. In the present specification, such a treatment is referred to as "molecular weight distribution adjustment treatment" and referred to as "denaturation/molecular weight distribution adjustment treatment" when the treatment involves denaturation of a protein, for convenience. Note that as long as the properties described above are satisfied, the specific vegetable protein material may be obtained by mixing a vegetable protein material that has undergone the molecular weight distribution adjustment treatment or denaturation/molecular weight distribution adjustment treatment with a protein that has not undergone the molecular weight distribution adjustment treatment or denaturation/molecular weight distribution adjustment treatment. In this case, a ratio of the two (protein material that has undergone the treatment: protein that has not undergone the treatment) can be adjusted as appropriate within a range that satisfies the properties described above, but may be, for example, from 1:99 to 99:1, for example, from 50:50 to 95:5, or from 75:25 to 90:10, in terms of mass ratio. In an embodiment, the vegetable protein material F is composed of a vegetable protein material that has undergone the molecular weight distribution adjustment treatment or denaturation/molecular weight distribution adjustment treatment.

The conditions of the treatment for decomposing or denaturing a protein, such as concentrations of an enzyme, an acid, an alkali, an organic solvent, a mineral, and the like, a temperature, a pressure, an output intensity, an electric current, and time can be appropriately set by those skilled in the art. In a case of a pH adjusting treatment, the treatment may be performed in a pH range having an upper limit and a lower limit of any value of pH 2, 2.5, 3, 3.5, 4, 4.5, 5, 5.5, 6, 6.5, 7, 7.5, 8, 8.5, 9, 9.5, 10, 10.5, 11, 11.5, and 12. In a case of the acid treatment, a method of adding an acid or a method of performing a fermentation treatment such as lactic acid fermentation may be used. Examples of the acid to be added include: inorganic acids such as hydrochloric acid and phosphoric acid; and organic acids such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid such as fruit juice such as a lemon, concentrated fruit juice, fermented milk, yoghurt, or brewed vinegar. In a case of the alkali treatment, an alkali such as sodium hydroxide or potassium hydroxide may be added. In a case of the denaturant treatment, a denaturant such as guanidine hydrochloride, urea, arginine, or PEG may be added. In the case of a heating or cooling treatment, examples of a heating temperature include from 60 to 150°C, for example, from 80°C to 110°C, from 100°C to 135°C, and from 125°C to 145°C. Examples of a cooling temperature include from -10 to -75°C, for example, from -15°C to -70°C and from -20°C to - 45°C. Examples of a heating or cooling time include from 5 seconds to 200 minutes, for example, from 10 seconds to 10 minutes, from 5 to 60 minutes, from 30 to 120 minutes, and from 90 to 150 minutes. In the case of a high-pressure treatment, examples of conditions of pressures include from 100 to 1000 MPa, for example, from 200 to 700 MPa, and from 300 to 500 MPa. In a case of the organic solvent treatment, examples of the solvent to be used include alcohols and ketones, for example, ethanol or acetone. In a case of the mineral addition treatment, examples of the mineral to be used include divalent metal ions such as calcium and magnesium. In a case of the supercritical treatment, for example, carbon dioxide in a supercritical state at a temperature of about 30°C or higher and a pressure of about 7 MPa or more can be used for treatment. In a case of the ultrasonic treatment, for example, the treatment may be performed by irradiation with an output of 100 to 1000 W at a frequency of 100 KHz to 2 MHz. In a case of the electrolysis treatment, for example, the aqueous protein solution may be treated by applying a voltage of from 100 mV to 1000 mV. In a specific embodiment, the treatment to decompose or denature a protein is selected from the denaturant treatment, the heating treatment, and combinations thereof.

The conditions of the treatment for adjusting molecular weight distribution, such as a type of an enzyme, a type of filter medium, the number of revolutions, an electric current, and time, can be appropriately set by those skilled in the art. Examples of the enzyme to be used include proteases classified into "metal protease", "acidic protease", "thiol protease", and "serine protease". The reaction can be carried out at a reaction temperature of 20 to 80°C, preferably 40 to 60°C. Examples of the filter medium include filter paper, filter cloth, diatomaceous earth, ceramic, glass, and membrane. Examples of a carrier for gel filtration include dextran and agarose. Examples of the conditions for centrifugation include 1000 to 3000 G, and 5 to 20 minutes.

### (Spray-Drying)

In the present invention, spray-drying is a process in which hot air is blown onto a water-containing composition while the water-containing composition is atomized to dry and remove water to form a powder.

In the present invention, the W/O/W type emulsion E is subjected to a spray-dryer to evaporate water in the aqueous phase D in the outermost layer, thereby obtaining a powdered oil and/or fat.

Conditions for the spray-drying can be appropriately set. That is, when a spray-dryer is used, a hot air temperature is preferably from 130 to 200°C and an exhaust air temperature is preferably from 60 to 100°C.

The powdered oil and/or fat obtained by spray-drying contains from 5 to 30 mass% of a highly unsaturated fatty acid. This value is more desirably from 7 to 20 mass%, and even more desirably from 8 to 14 mass%.

A water content of the powdered oil and/or fat is desirably from 0.5 to 5 mass%, more desirably from 0.7 to 3 mass%, and even more desirably from 0.8 to 2 mass%. It goes without saying that the water content decreased from that before spray-drying is derived from the aqueous phase D in the outermost layer.

Further, the powdered oil and/or fat contains from 5 to 60 mass% of the vegetable protein material F. This value is more desirably from 6 to 55 mass%, and even more desirably from 7 to 53 mass%. Due to the vegetable protein material F being contained in an appropriate amount, it is possible to obtain a powdered oil and/or fat containing highly unsaturated fatty acids which have excellent oxidation stability and has suppressed generation of off-flavors over time due to oxidation.

The embodiments of the present invention will be described in more detail with reference to Examples below.

### Examples

### Study 1: Preparation of W/O type emulsion C

W/O type emulsions C were prepared according to the formulations presented in Table 1-1. As a specific preparation method, the "• Method for preparing W/O type emulsion C" section was followed.

The particle diameters in the aqueous phases of the obtained W/O type emulsions C were measured and are collectively presented in Table 1-1.

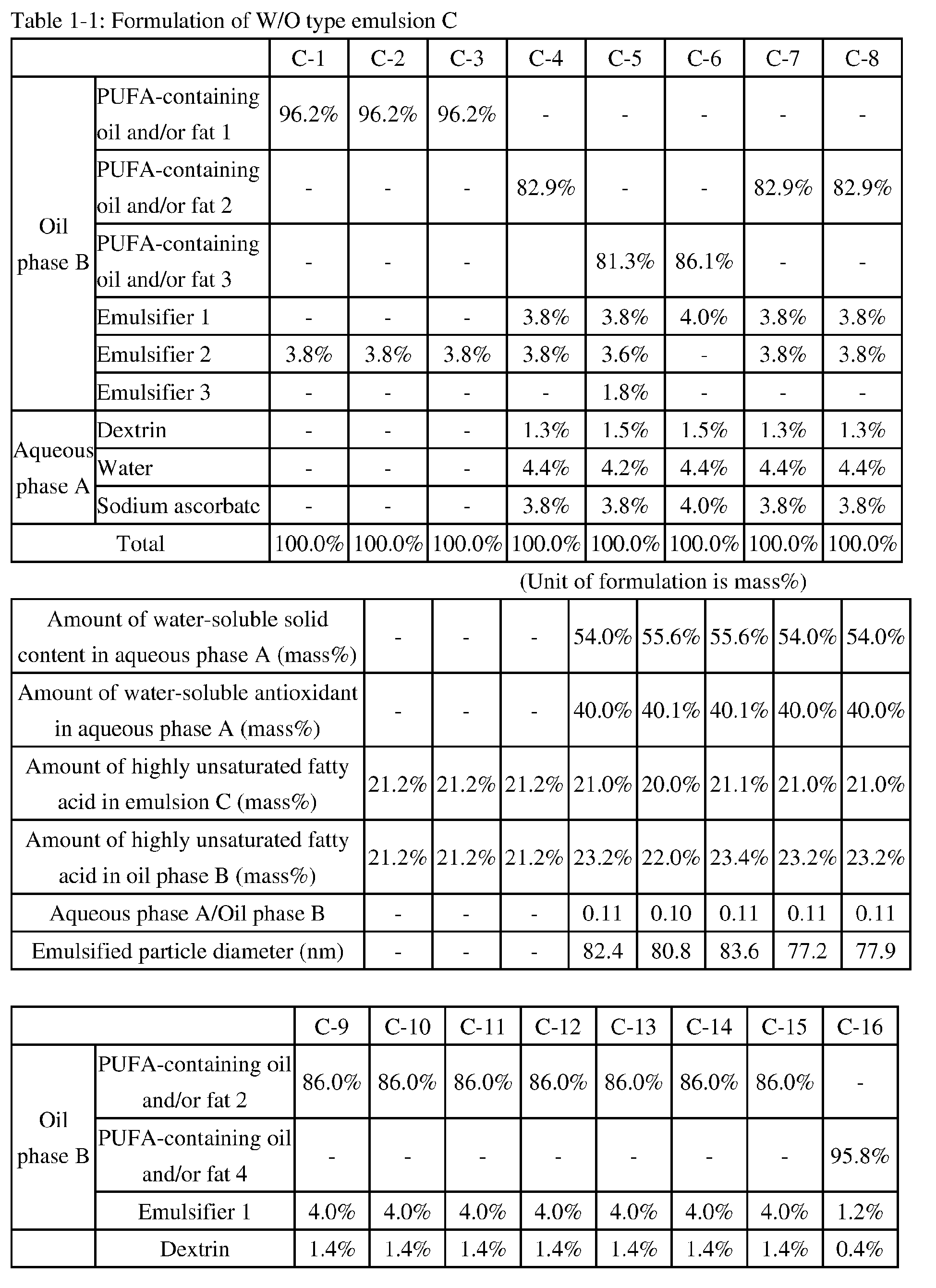

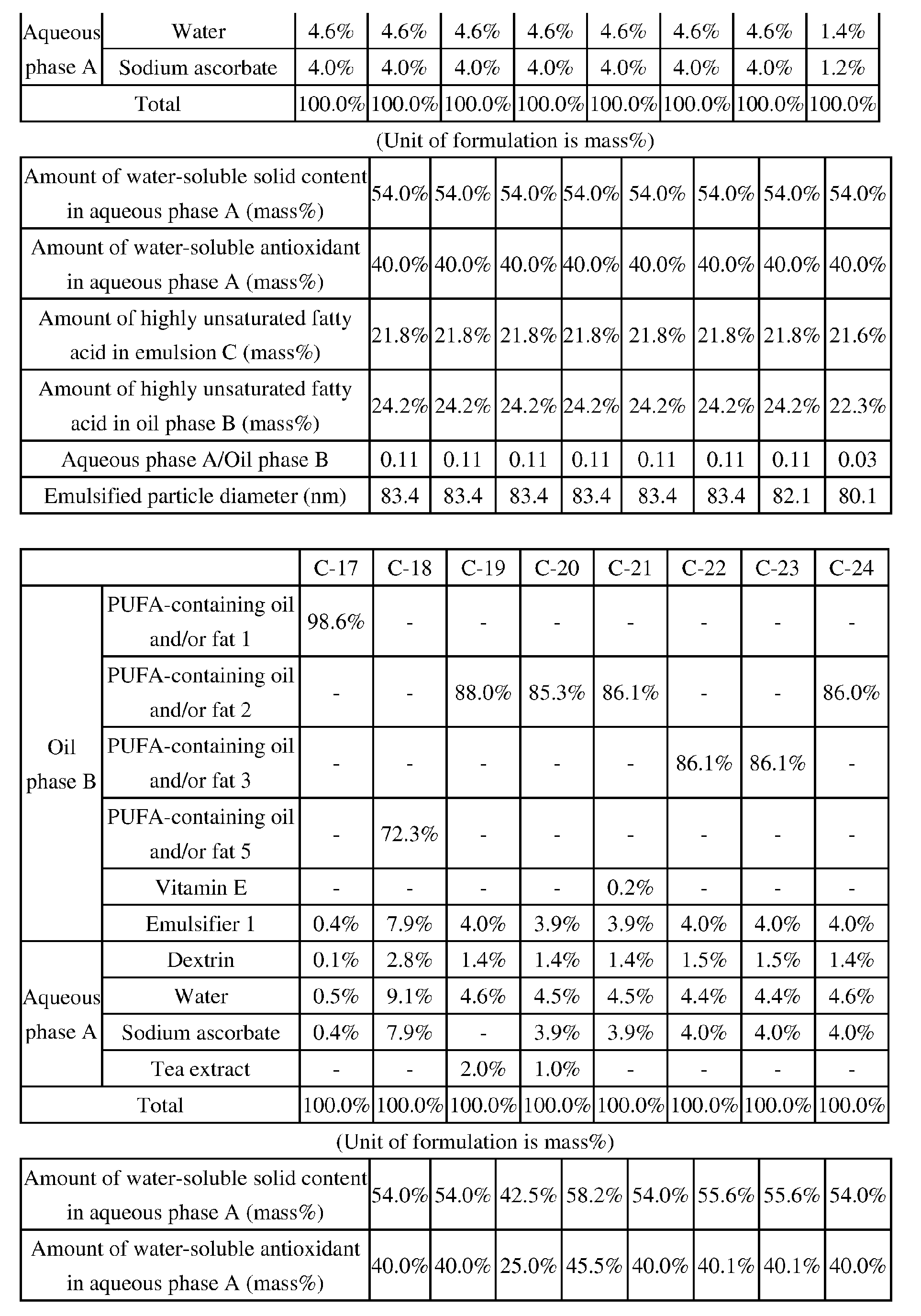

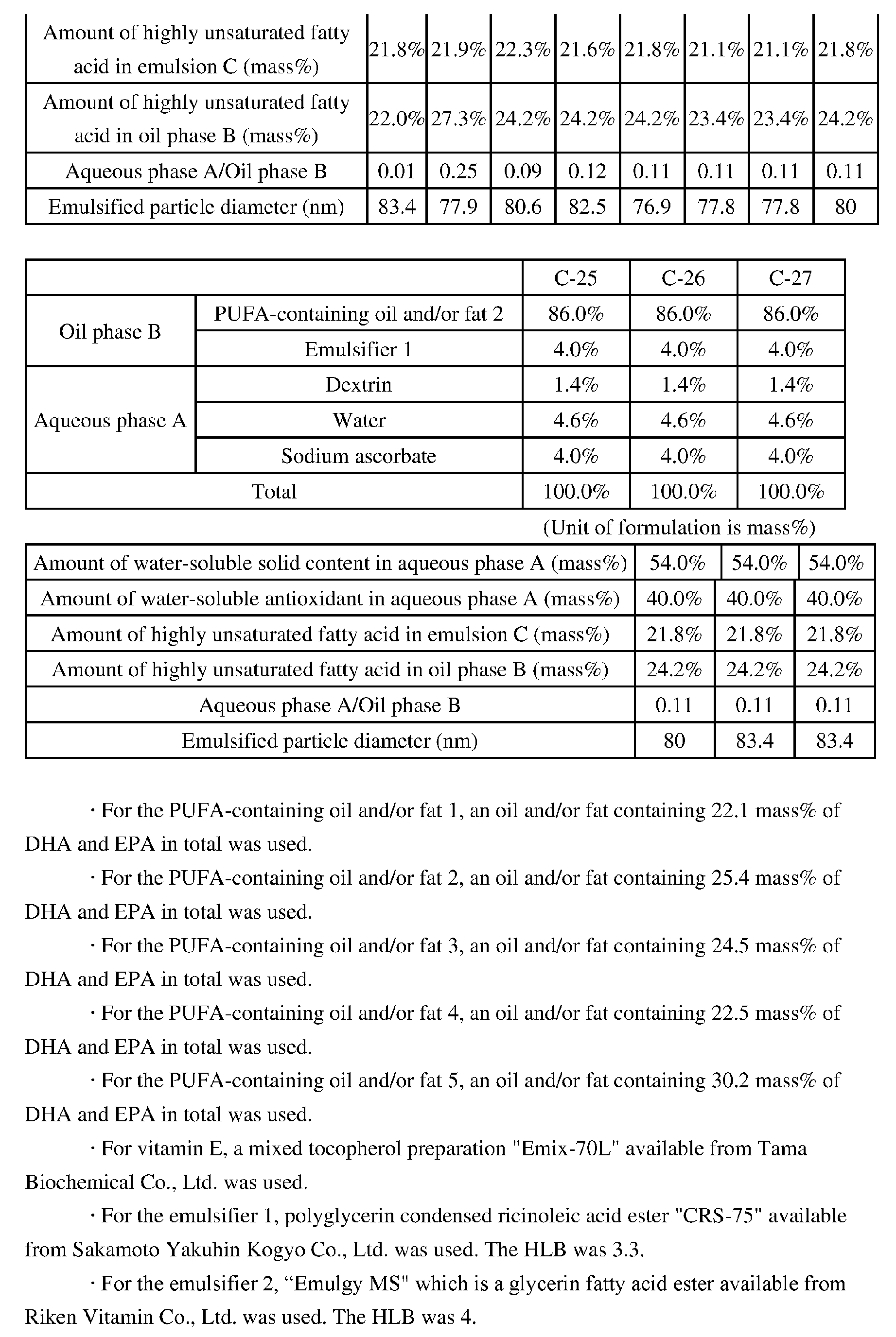

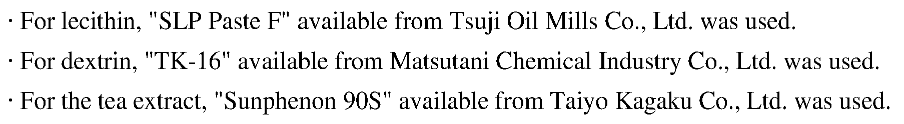

### • Method for preparing W/O type emulsion C

1. According to the formulation, the raw materials for the aqueous phase A were mixed to prepare the aqueous phase A. (Nothing was done in the formulations where no aqueous phase A was present).
2. According to the formulation, the raw materials for the oil phase B were mixed to prepare the oil phase B.
3. The aqueous phase A was added to the oil phase B with stirring to obtain a near-emulsion C.
4. The near-emulsion C was treated (20 passes, from 30 to 40 MPa) using a high-pressure homogenizer to obtain a W/O type emulsion C.

### Study 2: Preparation of aqueous phase D

The aqueous phases D were prepared according to the formulations presented in Table 2-1. The preparation was conducted by dissolving the components in water.

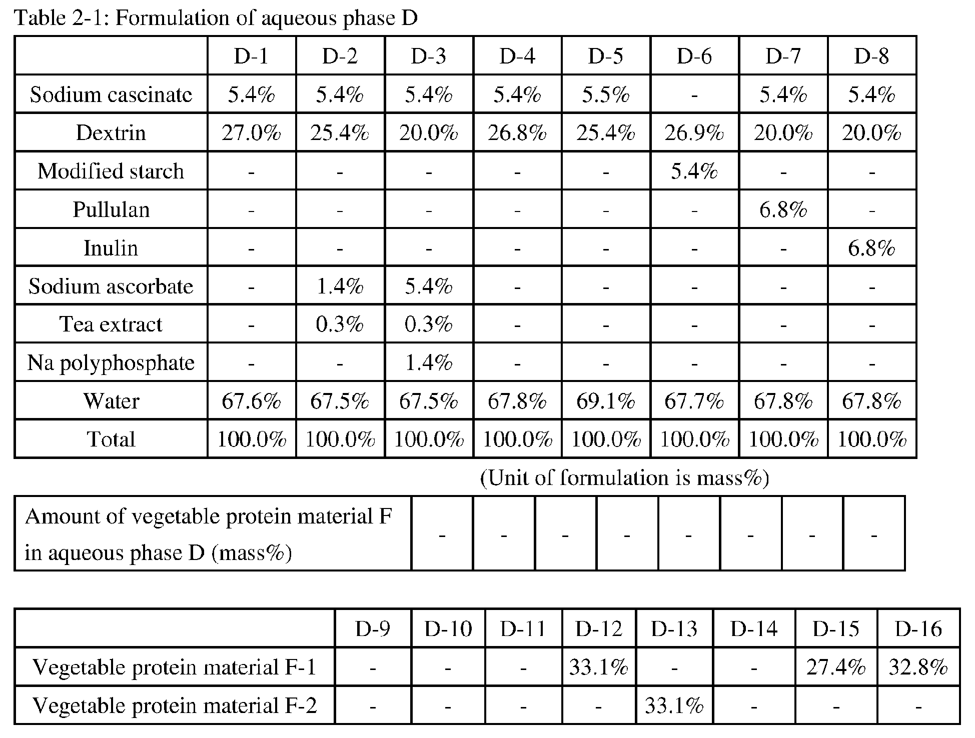

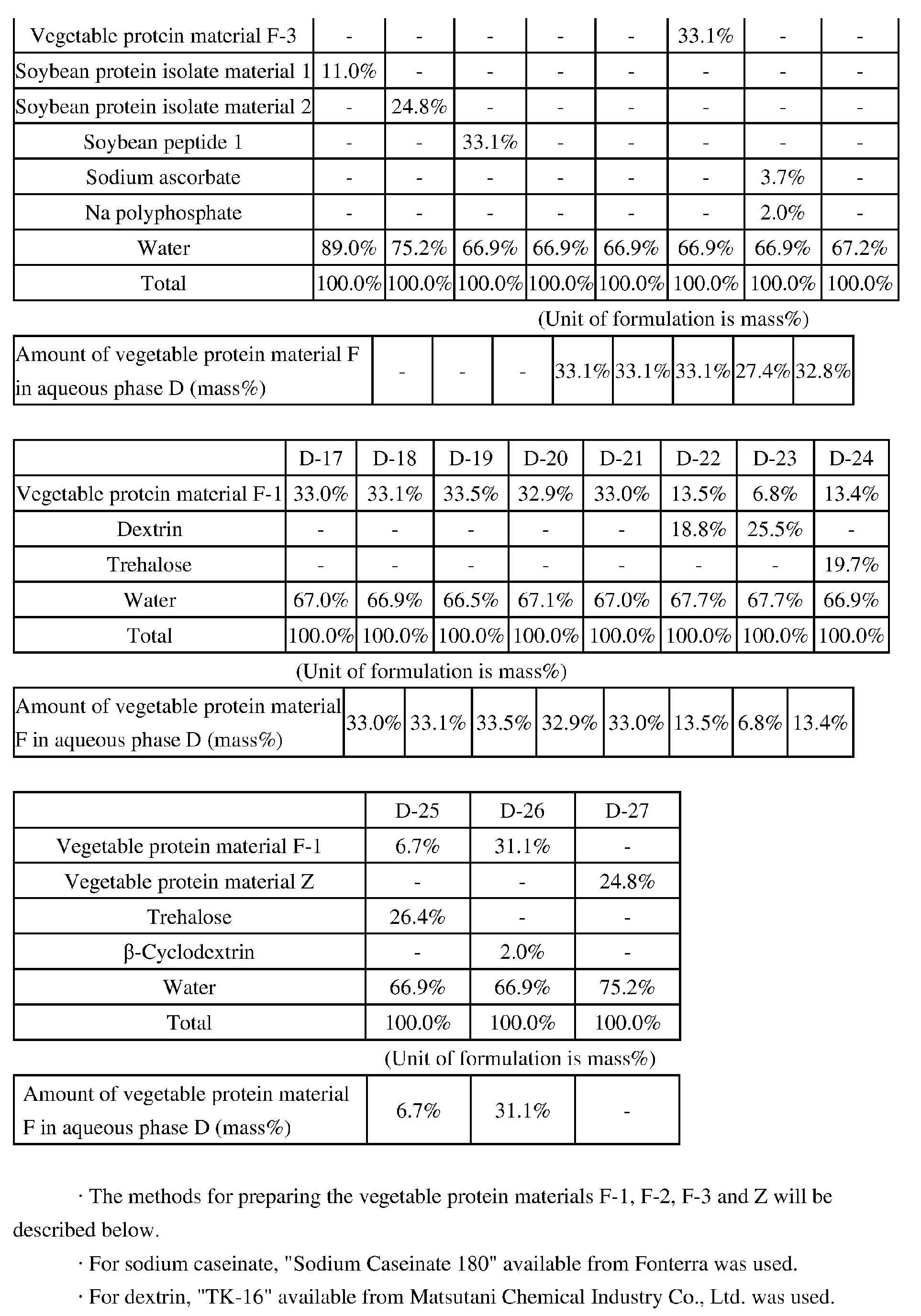

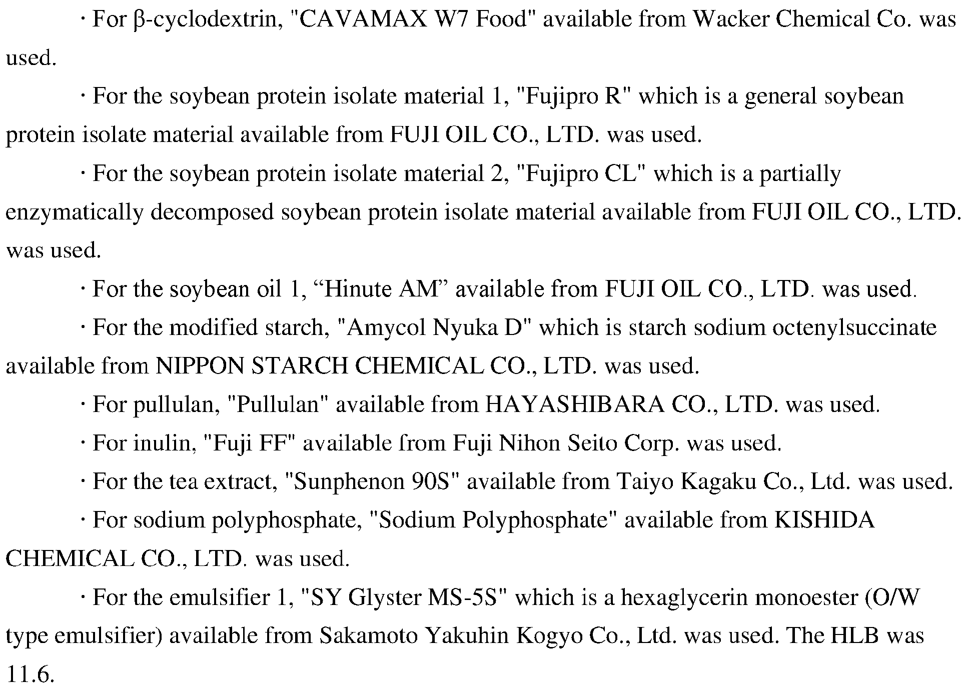

### Study 3: Preparation of vegetable protein material

The methods for preparing the vegetable protein materials F1, F2, F3 and Z will be described below. The results of protein purities, NSIs, and molecular weight distributions for these vegetable protein materials as well as for the soybean protein isolates 1 and 2 and the soybean peptide 1 were summarized in Table 3-1.

### Study 3-1: Regarding vegetable protein material F-1

To an aqueous solution of enzymatically decomposed soybean protein isolate (Fujipro CL) (FUJI OIL CO., LTD.), arginine was added as a denaturing agent to attain a concentration of 0.5 M. This aqueous solution was heated at 121°C for 10 minutes, desalted, adjusted to pH 4.5 with hydrochloric acid, centrifuged at 10000 G for 10 minutes, and the supernatant was recovered. The recovered supernatant was desalted using a MW3500 dialysis tube, centrifuged again at 10000 G for 10 minutes, and the supernatant was recovered and spray-dried (hot air temperature: 140°C, exhaust air temperature: 70°C) to obtain a vegetable protein material F-1 having a water content of 1.0%.

### Study 3-2: Regarding vegetable protein material F-2

To an aqueous solution of soybean protein isolate (Fujipro R) (FUJI OIL CO., LTD.), arginine was added as a denaturing agent to attain a concentration of 0.5 M. This aqueous solution was heated at 121°C for 10 minutes, desalted, adjusted to pH 4.5 with hydrochloric acid, centrifuged at 10000 G for 10 minutes, and the supernatant was recovered. The recovered supernatant was desalted using a MW3500 dialysis tube, centrifuged again at 10000 G for 10 minutes, and the supernatant was recovered and spray-dried (hot air temperature: 140°C, exhaust air temperature: 70°C) to obtain a vegetable protein material F-2 having a water content of 1.0%.

### Study 3-3: Regarding vegetable protein material F-3

To an aqueous solution of soybean protein isolate (Fujipro R) (FUJI OIL CO., LTD.), guanidine hydrochloride was added as a denaturing agent to attain a concentration of 4 M. This aqueous solution was heated at 121°C for 10 minutes, cooled, adjusted to pH 4.5 with hydrochloric acid, centrifuged at 10000 G for 10 minutes, and the supernatant was recovered. The recovered supernatant was desalted using a MW3500 dialysis tube, centrifuged again at 10000 G for 10 minutes, and the supernatant was recovered and spray-dried (hot air temperature: 140°C, exhaust air temperature: 70°C) to obtain a vegetable protein material F-3 having a water content of 1.0%.

### Study 3-4: Regarding vegetable protein material Z

The vegetable protein material Z was prepared with reference to the description of WO 2019/189810.

**Table 3-1: Analysis values of each protein material and the like**

| | Protein purity (mass%) | NSI | Molecular weight distribution (area ratio (%) having 2000 Da or more and less than 20000 Da) |
|---|---|---|---|
| Vegetable protein material F-1 | 80.3 | 97.3 | 71.9 |
| Vegetable protein material F-2 | 81.2 | 96.5 | 64.0 |
| Vegetable protein material F-3 | 81.1 | 94.8 | 54.5 |
| Vegetable protein material Z | 90.4 | 88.1 | 38.0 |
| Soybean protein isolate material 1 | 90.1 | 95 | 13.0 |
| Soybean protein isolate material 2 | 90.8 | 66 | 48.0 |
| Soybean peptide 1 | 90.4 | 100 | 20.0 |

### Study 4: Preparation of W/O/W type emulsion E

W/O/W type emulsions E were prepared according to the formulations presented in Table 4-1. For the preparation method, the "• Method for preparing W/O/W type emulsion E" section was followed.

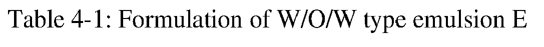

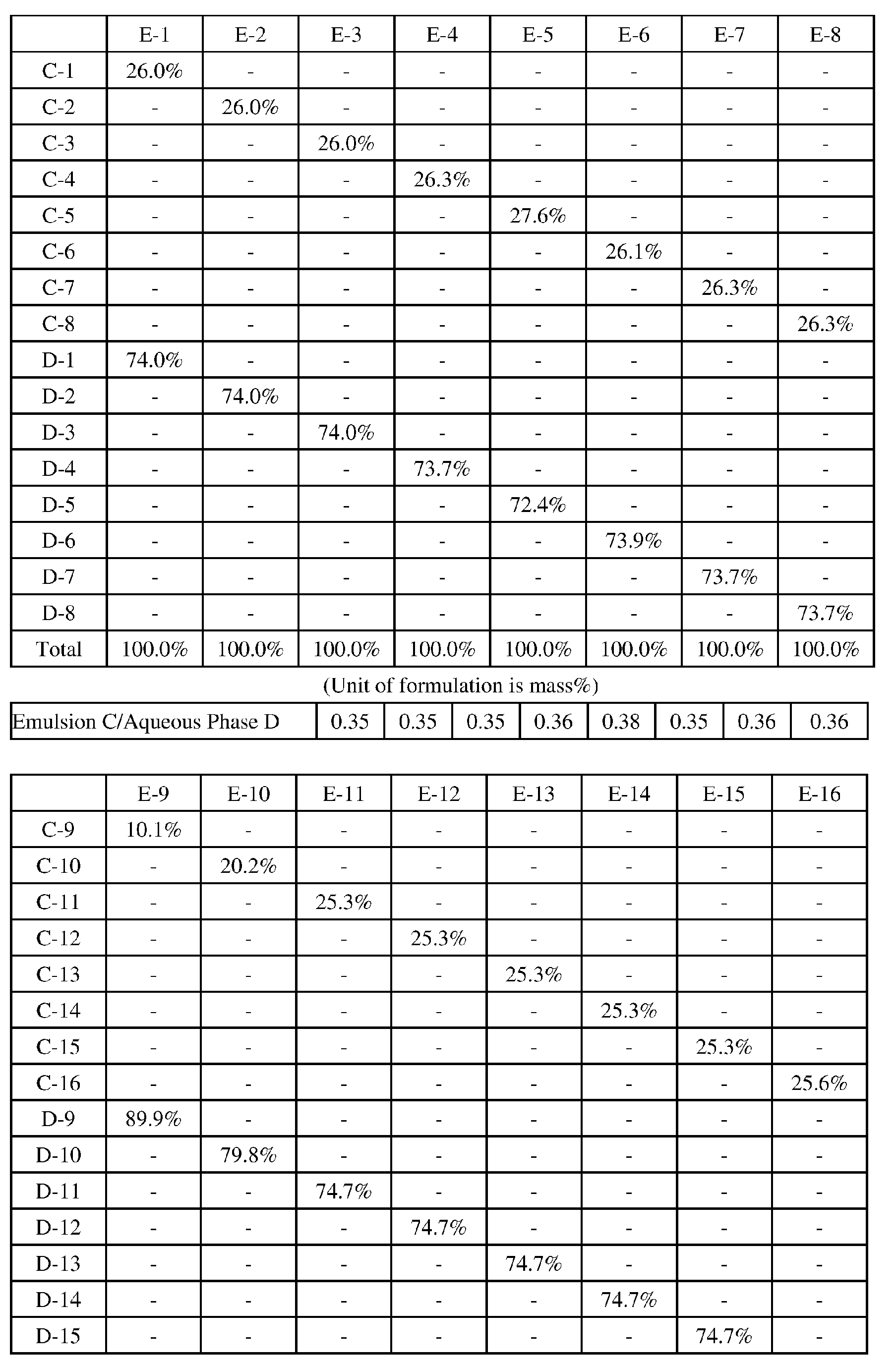

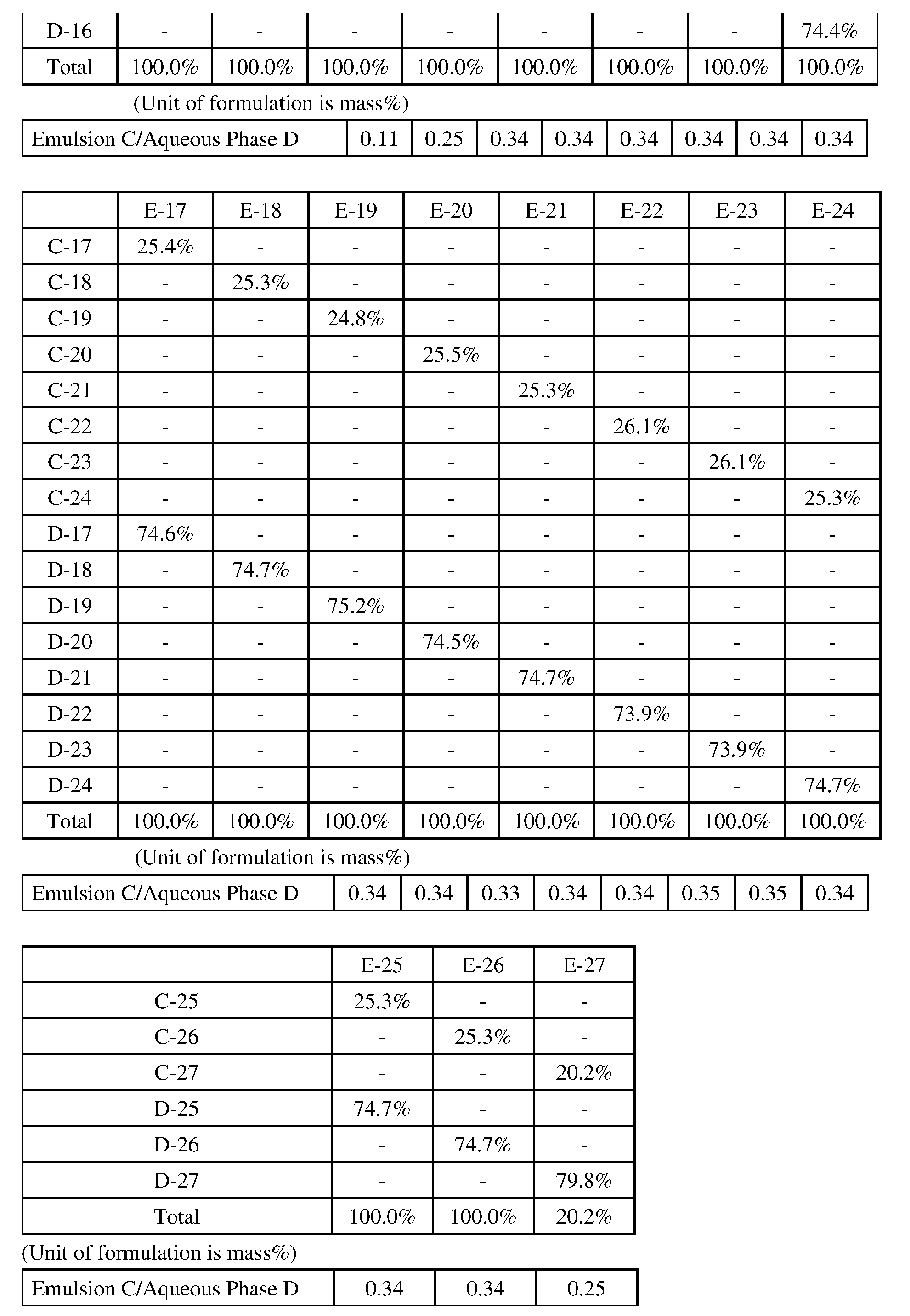

### • Method for preparing W/O/W type emulsion E

According to the formulation, each emulsion C was added to each aqueous phase D under stirring, and the mixture was further stirred to obtain a W/O/W type emulsion.

### Study 5: Spray-drying and evaluation

Each W/O/W type emulsion E obtained in Study 4 was spray-dried. The conditions for the spray-drying were hot air at 150°C and exhaust air at 90°C.

The obtained powdered oils and/or fats are summarized in Table 5-1.

Next, each of the obtained powdered oils and/or fats was evaluated as follows. The evaluation results are collectively presented in Table 5-1.

### ∘ Measurement of water content after spray-drying

The water content of the powder after each trial production was determined by a normal pressure heating and drying method (105°C, 5 hours).

### ∘ Flavor evaluation immediately after trial production

The powder after each trial production was allowed to stand at room temperature for 1 hour, and then graded according to the following criteria by a conference of five panelists.

Score 5: No strange smell due to oxidation of the highly unsaturated fatty acid was detected.

Score 4: Two or less panelists detected the strange smell due to oxidation of the highly unsaturated fatty acid, but the strange smell was judged to be at an insignificant level.

Score 3: Although a slight strange smell due to oxidation of the highly unsaturated fatty acid was detected, the strange smell was judged to be within an allowable range.

Score 2: A strange smell due to oxidation of the highly unsaturated fatty acid was detected, and judged to fall beyond the allowable range.

Score 1: A considerably strong strange smell due to oxidation of the highly unsaturated fatty acid was detected.

(In the flavor after storage, scores of 3 or higher were judged to be acceptable.)

### ∘ Flavor evaluation after storage

The powder after each trial production was placed in a polyethylene bag and stored at 40°C for 60 days in a light-shielded state (without nitrogen purging), and then evaluated in the same manner as in the " ∘ Flavor evaluation immediately after trial production" section.

### ∘ Measurement of POV of extracted oil after storage

1. The powder after each trial production was placed in a polyethylene bag and stored at 40°C for 60 days in a light-shielded state (without nitrogen purging).
2. Normal hexane (300 g) was added to 30 g of each sample, followed by filtration and extraction of an oil content into the hexane layer.
3. Hexane was removed by vacuum distillation using a rotary evaporator to obtain an extracted oil.
4. The peroxide value (POV) of each extracted oil was measured in accordance with The JOCS Standard Methods for the Analysis of Fats, Oils and Related Materials, 2.5.2.1-2013 Peroxide value (acetic acid-isooctane method).

Scores of 9 or less were determined to be acceptable.

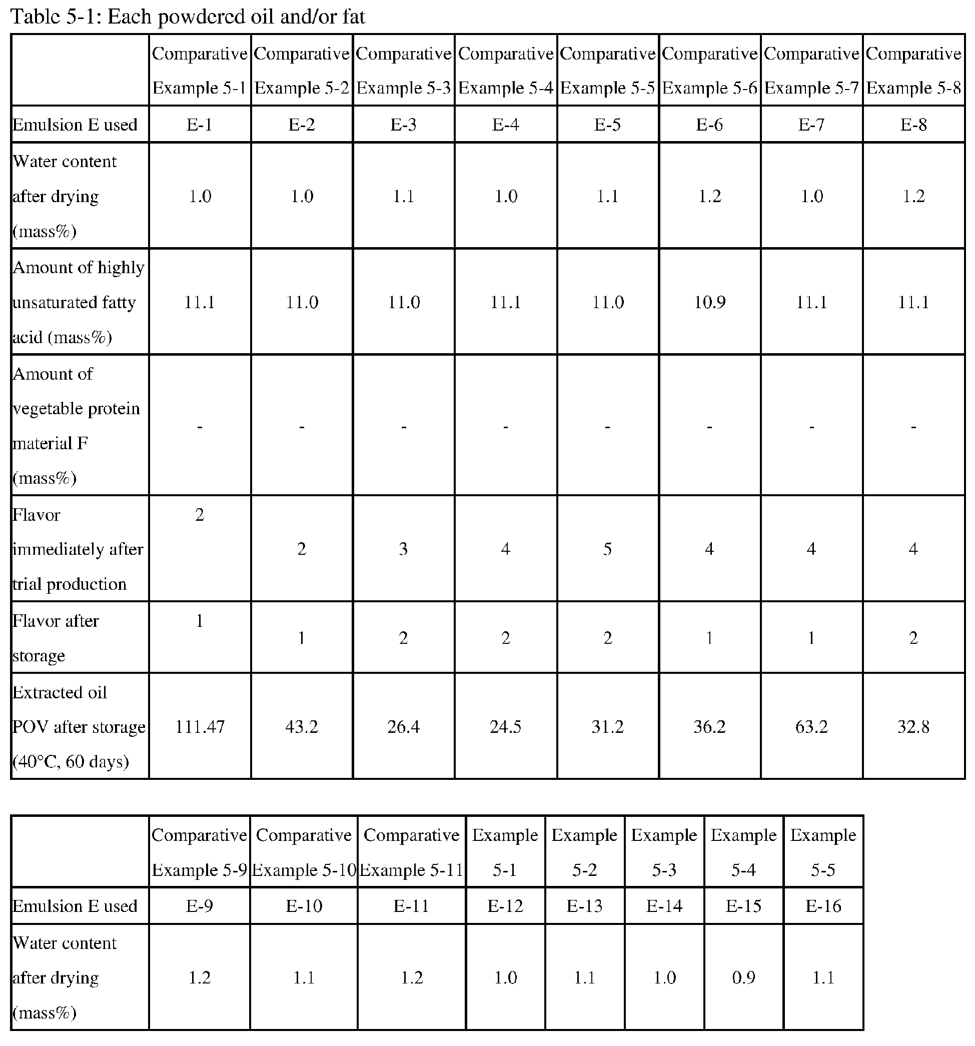

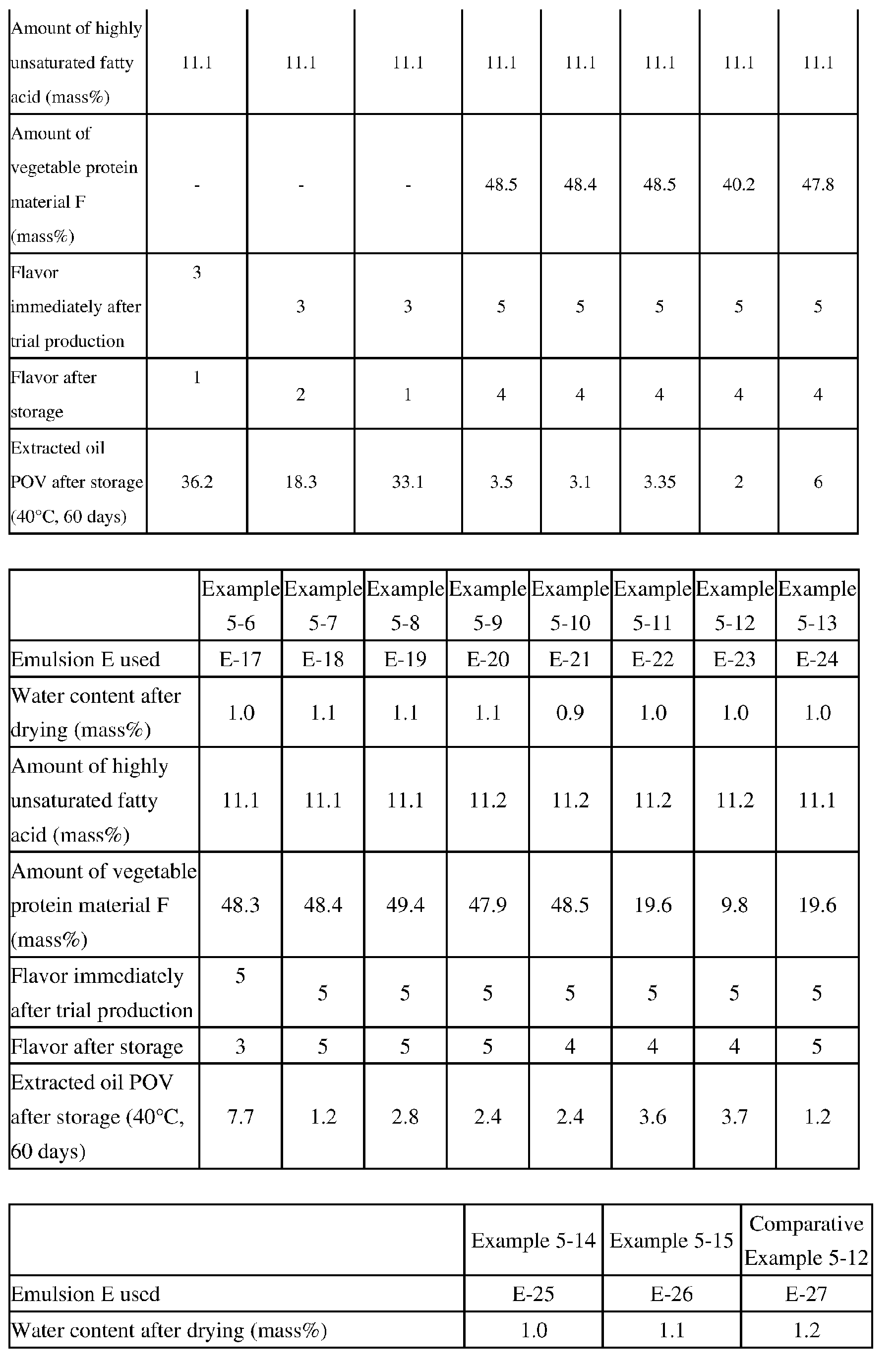

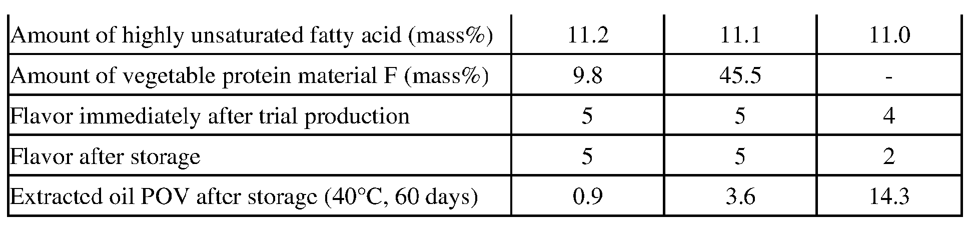

### Discussion

- Comparative Example 5-1 was a powdered oil and/or fat prepared by a known method, and the flavor was unacceptable at the stage immediately after the trial production.
- In Comparative Example 5-2, the water-soluble antioxidant was added to the aqueous phase in the preparation of the powdered oil and/or fat by the known method, and the flavor was unacceptable at the stage immediately after the trial production.
- In Comparative Example 5-3, the amount of the water-soluble antioxidant added to the aqueous phase was increased as compared with that in Comparative Example 5-2. The flavor was acceptable immediately after the preparation, but unacceptable after the storage test.
- Comparative Example 5-4 was in a double emulsion state, and the flavor after storage was unacceptable.
- In Comparative Example 5-5, double emulsification was performed as in Comparative Example 5-4, and further, lecithin was added to the oil phase to stabilize emulsification. The flavor after storage was unacceptable.
- In Comparative Example 5-6, double emulsification was performed as in Comparative Example 5-4, and dextrin and modified starch were added to the aqueous phase D without adding sodium caseinate. The flavor after storage was unacceptable.
- In Comparative Example 5-7, double emulsification was performed as in Comparative Example 5-4, and sodium caseinate, dextrin and pullulan were added to the aqueous phase D. The flavor after storage was unacceptable.
- In Comparative Example 5-8, inulin was added instead of pullulan in Comparative Example 5-7. The flavor after storage was unacceptable.
- In each of Comparative Example 5-9 and 5-10 and 5-11, a known water-soluble protein material and a known soybean peptide material were added. The flavor after storage was unacceptable.
- In Comparative Example 5-12, the vegetable protein material Z prepared with reference to WO 2019/189810 was used. The flavor after storage was unacceptable.
- In Examples 5-1 to 5-16, a predetermined amount of the predetermined vegetable protein material F was added, and the flavor after storage was also good.

## Claims

1. A method for producing a powdered oil and/or fat, the method comprising the following steps of:
1. preparing an aqueous phase A comprising from 15 to 50 mass% of a water-soluble antioxidant dissolved;
2. obtaining a W/O type emulsion C by adding the aqueous phase A to an oil phase B comprising a highly unsaturated fatty acid;
3. obtaining an aqueous phase D by dissolving a vegetable protein material F in water, the aqueous phase D having a vegetable protein material F content of from 3 to 45 mass%;
4. obtaining a W/O/W type emulsion E by mixing the W/O type emulsion C and the aqueous phase D; and
5. obtaining a powdered oil and/or fat containing from 5 to 30 mass% of the highly unsaturated fatty acid by spray-drying the W/O/W type emulsion E,
wherein the vegetable protein material F satisfies the following requirements a) to c):
a) a protein content in a solid content is 70 mass% or more,
b) an NSI is 80 or more, and
c) an area ratio having 2000 Da or more and less than 20000 Da is from 45 to 90% in a measurement result of a molecular weight distribution.

2. The production method according to claim 1, wherein a particle diameter of the aqueous phase A in the emulsion C is 500 nm or less.

3. The production method according to claim 1 or 2, wherein the aqueous phase A further comprises a carbohydrate.

4. A method for suppressing generation of off-flavors due to oxidation in a powdered oil and/or fat containing a highly unsaturated fatty acid, the method comprising the following steps of:
1. preparing an aqueous phase A comprising from 15 to 50 mass% of a water-soluble antioxidant dissolved;
2. obtaining a W/O type emulsion C by adding the aqueous phase A to an oil phase B comprising a highly unsaturated fatty acid;
3. obtaining an aqueous phase D by dissolving a vegetable protein material F in water, the aqueous phase D having a vegetable protein material F content of from 3 to 45 mass%;
4. obtaining a W/O/W type emulsion E by mixing the W/O type emulsion C and the aqueous phase D; and
5. obtaining a powdered oil and/or fat containing from 5 to 30 mass% of the highly unsaturated fatty acid by spray-drying the W/O/W type emulsion E,
wherein the vegetable protein material F satisfies the following requirements a) to c):
a) a protein content in a solid content is 70 mass% or more,
b) an NSI is 80 or more, and
c) an area ratio having 2000 Da or more and less than 20000 Da is from 45 to 90% in a measurement result of a molecular weight distribution.

5. The method according to claim 4, wherein a particle diameter of the aqueous phase A in the emulsion C is 500 nm or less.

6. The method according to claim 4 or 5, wherein the aqueous phase A further comprises a carbohydrate.

7. A powdered oil and/or fat having the following configuration of:
1. comprising from 5 to 30 mass% of a highly unsaturated fatty acid;
2. comprising: an oil phase B as a continuous phase comprising a highly unsaturated fatty acid; and an aqueous phase A comprising from 15 to 50 mass% of a water-soluble antioxidant dissolved, the aqueous phase A being dispersed in the oil phase B; and
3. comprising from 5 to 60 mass% of a vegetable protein material F,
wherein the vegetable protein material F satisfies the following requirements a) to c):
a) a protein content in a solid content is 70 mass% or more,
b) an NSI is 80 or more, and
c) an area ratio having 2000 Da or more and less than 20000 Da is from 45 to 90% in a measurement result of a molecular weight distribution.

8. The powdered oil and/or fat according to claim 7, wherein a particle diameter of the aqueous phase A present in the oil phase B is 500 nm or less.

9. The powdered oil and/or fat according to claim 7 or 8, wherein the aqueous phase A further comprises a carbohydrate.
